# DEMANDE DE BREVET EUROPEEN

(11) **EP 2 361 511 A1**
(43) Date de publication de la demande: **31.08.2011**
(21) Numéro de dépôt: 11152267.8
(22) Date de dépôt: 26.01.2011
(51) Int. Cl.: A23L 1/01, A47J 37/00, H05B 6/80

(54) **Dispositif de décongelation, réchauffage et cuisson d'un produit alimentaire, notamment d'une pâte alimentaire surgelée**

(30) Priorité: 27.01.2010 FR 1000316
(71) Demandeur: Societe d'Exploitation de Brevets Alimentaires SEBA, 74120 Demi-Quartier (FR)
(72) Inventeur: Bouteloup, Claude, 71220, SIVIGNON (FR); Henry, René, 71220, SIVIGNON (FR)
(74) Mandataire: Oudin, Stéphane

(57) **Abrégé**

L'invention concerne un dispositif de décongélation, réchauffage et cuisson d'un produit alimentaire, notamment d'une pâte alimentaire surgelée.

La présente invention propose un dispositif de décongélation, réchauffage et cuisson d'une pâte alimentaire, notamment de produits surgelés, comprenant au moins une enceinte de chauffage, pourvue d'au moins une sole et d'une rampe de tubes émetteurs de rayons chauffants à ondes courtes à forte puissance disposés au-dessus de ladite sole, à faible distance de celle-ci et au-dessus de sa surface remarquable en ce que tout ou partie de la surface supérieure des dits tubes émetteurs de rayons chauffants à ondes courtes à forte puissance est recouverte par une couche de céramique.

## Description

L'invention concerne un dispositif de décongélation, réchauffage et cuisson d'un produit alimentaire, notamment d'une pâte alimentaire surgelée.

On sait que la cuisson ou le réchauffage de produits alimentaires surgelés exige un temps de chauffage relativement long et qui n'est pas adapté à une préparation et commercialisation sur place rapides.

Ainsi, la cuisson d'une pizza surgelée exige habituellement un temps de traitement au four micro-ondes de 3 à 4 minutes et un temps de traitement au four conventionnel classique à 250°C de 6 à 7 minutes (sans compter le temps de préchauffage du four). On aboutit ainsi à un temps total de préparation de l'ordre de 9 à 11 minutes qui est trop long pour permettre une préparation sur place rapide.

On connaît de l'art antérieur (FR2889029) un dispositif de décongélation, réchauffage et cuisson d'une pâte alimentaire, notamment de produits surgelés, caractérisé en ce qu'il comprend au moins une enceinte de chauffage, pourvue d'au moins une sole chauffante de ladite pâte alimentaire et d'une rampe de tubes émetteurs de rayons chauffants à ondes courtes à forte puissance disposés au-dessus de ladite sole, à faible distance de celle-ci et au-dessus de sa surface, le rayonnement chauffant à ondes courtes étant concentré sur la surface supérieure de la pâte alimentaire par une plaque réfléchissante sus-jacente à ladite rampe de tubes émetteurs et la surface inférieure de la pâte étant chauffée à haute température par contact avec la sole chauffante.

Il résulte de cette disposition que ce type de dispositif opère sur la pâte alimentaire surgelée successivement un ramollissement rapide de la pâte, progressivement dans son épaisseur depuis sa surface supérieure, la prise de cuisson de la pâte ramollie par la sole chauffante inférieure et l'ambiance chaude de l'enceinte, et enfin un effet croustillant supérieur de cuisson de la surface supérieure de la pâte en fin de cuisson, ceci sur une durée courte d'environ une à deux minutes, ce qui permet une préparation et commercialisation du produit alimentaire stocké surgelé puis cuit sur place.

Ce type de dispositif, bien qu'apportant d'importants avantages par rapport au four classique présente certains inconvénients et notamment une déperdition énergétique importante en provenance des tubes émetteurs et de la sole qui doit être chaude en permanence afin de pouvoir répondre immédiatement à une demande de cuisson d'un aliment de façon réaliste et rentable. De plus les parois de ce type de produit atteignent des températures trop importantes car la chaleur, bloquée par la plaque réfléchissante, n'est pas évacuée par le sommet du four.

La présente invention se propose d'améliorer les dispositifs décrits par FR2889029. Ainsi la présente invention propose un dispositif de décongélation, réchauffage et cuisson d'un produit alimentaire, notamment d'une pâte alimentaire surgelée, comprenant au moins une enceinte de chauffage, pourvue d'au moins une sole et d'une rampe de tubes émetteurs de rayons chauffants à ondes courtes à forte puissance disposés au-dessus de ladite sole, à faible distance de celle-ci et au-dessus de sa surface remarquable en ce que tout ou partie de la surface supérieure des dits tubes émetteurs de rayons chauffants à ondes courtes à forte puissance est recouverte par une couche de céramique.

Il résulte de la présence de la couche de céramique, à la surface des tubes émetteurs, une meilleure réflexion des ondes vers la sole et une augmentation importante de la déperdition énergétique vers le haut du four. En conséquence la température des parois du dispositif selon l'invention est compatible avec une utilisation sûre dudit dispositif.

Selon un mode de réalisation préféré de l'invention ladite sole est une plaque en verre (e.g. le verre trempé, la vitrocéramique) chauffée par une rampe de tubes émetteurs de rayons chauffants à ondes courtes à forte puissance disposés en-dessous de ladite sole, à faible distance de celle-ci et en-dessous de sa surface. Selon un mode de réalisation encore plus préféré la surface inférieure des dits tubes émetteurs de rayons chauffants à ondes courtes à forte puissance est recouverte par une couche de céramique. Ainsi, la sole peut être chauffée et refroidie plus rapidement qu'avec les dispositifs de l'art antérieur, ce qui augmente considérablement le rendement énergétique et la rapidité d'utilisation du dispositif selon l'invention. Ainsi, grâce au dispositif selon l'invention, la sole peut être chauffée à la demande et il n'est plus nécessaire de la maintenir constamment à température. Selon un mode de réalisation encore plus préféré, le dispositif selon l'invention comprend en outre une grille métallique placée parallèlement, au dessus et à faible distance de ladite plaque de verre. Ladite grille métallique peut être utilisée comme support pour le produit alimentaire à cuire. Dans ce cas, la cuisson du dessous du produit alimentaire se fait par transmission du rayonnement infrarouge à travers ladite plaque de verre. Ce type de cuisson est plus particulièrement adapté aux produits alimentaires de type tapas. Ladite grille métallique peut être directement posée à la surface de ladite plaque de verre. Dans ce dernier cas ladite grille métallique peut comprendre en outre des pieds permettant de maintenir la surface de la grille, destinée à supporter le produit alimentaire, à un certaine distance de ladite plaque de verre.

Ainsi la présente invention concerne également, un dispositif de décongélation, réchauffage et cuisson d'un produit alimentaire, notamment d'une pâte alimentaire surgelée, caractérisé en ce qu'il comprend au moins une enceinte de chauffage, pourvue d'au moins une sole en verre et d'une première rampe de tubes émetteurs de rayons chauffants à ondes courtes à forte puissance disposés au-dessus de ladite sole, à faible distance de celle-ci et au-dessus de sa surface remarquable en ce que la surface supérieure desdits tubes émetteurs de rayons chauffants à ondes courtes à forte puissance de la première rampe est recouverte par une couche de céramique et d'une deuxième rampe de tubes émetteurs de rayons chauffants à ondes courtes à forte puissance disposés en-dessous de ladite sole, à faible distance de celle-ci et en-dessous de sa surface remarquable en ce que la surface inférieure desdits tubes émetteurs de rayons chauffants à ondes courtes à forte puissance de la deuxième rampe est recouverte par une couche de céramique.

Ladite sole est avantageusement montée sur un tiroir mobile relativement à une ouverture adéquate de l'enceinte du dispositif, ce tiroir étant apte à être sorti pour la dépose du produit sur la sole et à être amené à l'intérieur de l'enceinte et, de même pour son retrait à la fin de la cuisson avec éventuellement, une extraction à sortie automatique en fin de cuisson comme un grille-pain.

Dans le cadre de la présente invention le terme « surface supérieure desdits tubes émetteurs » fait référence à la portion de la surface du tube émetteur située au dessus du plan de symétrie, dudit tube émetteur, parallèle à la sole. Le terme « surface inférieure desdits tubes émetteurs » fait référence à la portion de la surface du tube émetteur située en dessous du plan de symétrie, dudit tube émetteur, parallèle à la sole.

Préférentiellement, toute la surface supérieure (ou inférieure selon qu'il s'agit de la première ou de la deuxième rampe) desdits tubes émetteurs est recouverte par une couche de céramique. Il est à noter que la couche de céramique peut également recouvrir une portion plus grande desdits tubes émetteurs, pour autant que cela n'empêche pas l'émission du rayonnement vers la sole.

Dans le cadre de la présente invention le terme « recouverte » signifie que ladite céramique est en contact direct ou à une distance inférieure à 2 mm de la surface desdits tubes émetteurs. Selon un mode de réalisation préféré de l'invention, ladite céramique est en contact direct de la surface desdits tubes émetteurs.

Ladite couche de céramique peut être d'épaisseur variable. Elle peut notamment varier d'un tube à l'autre, ou d'un point à l'autre de la surface d'un même tube. Selon un mode réalisation préféré de l'invention, l'épaisseur de ladite couche de céramique est comprise entre 1 et 5 mm, de façon tout à fait préférée entre 2 et 3 mm.

Ladite rampe de tubes émetteurs est avantageusement disposée de façon parallèle à la surface de la sole, à faible distance de celle-ci, de l'ordre de 50 à 100 mm.

Les tubes émetteurs sont de forte puissance électrique, de l'ordre de plusieurs centaines de watts (préférentiellement 500W), et sont disposés parallèles l'un à l'autre dans un même plan et à une distance déterminée réglable fonction de leur hauteur au-dessus de la sole et/ou de la surface supérieure du produit alimentaire, de leur puissance ou de la nature du produit alimentaire pour permettre une cuisson régulière en surface du produit, ou son réchauffage seul et sans effet de cuisson irrégulière, par exemple de lignes de cuisson. Dans le cadre de la présente invention, le terme « à ondes courtes à forte puissance » fait référence à des longueurs d'ondes comprises entre 1 et 4 µm et préférentiellement entre 2 et 3 µm.

Le dispositif selon l'invention permet également la cuisson rapide de tout produit alimentaire. Parmi ces produits ont peut citer les tapas et les produits à base de pâte alimentaire.

Ladite pâte alimentaire est avantageusement de forme générale plane et d'épaisseur de celle d'une tarte, d'épaisseur peu importante, (0.5 à 30 mm environ) de manière à permettre un temps de cuisson rapide dans l'épaisseur de la pâte et les produits alimentaires de type pizza, paninis, quiches, hot dogs consommés sous forme chaude conviennent.

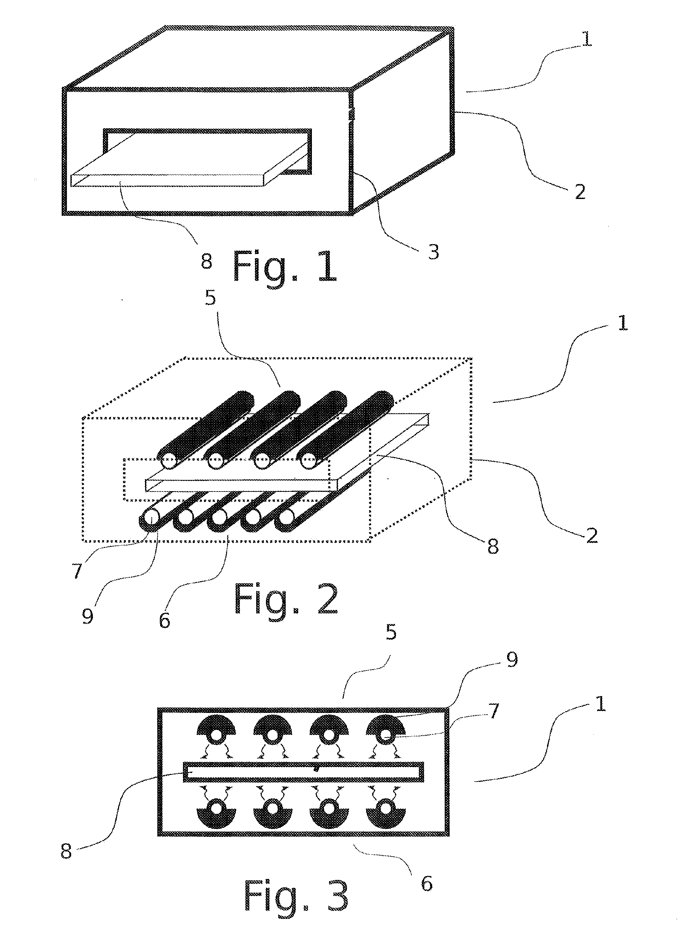

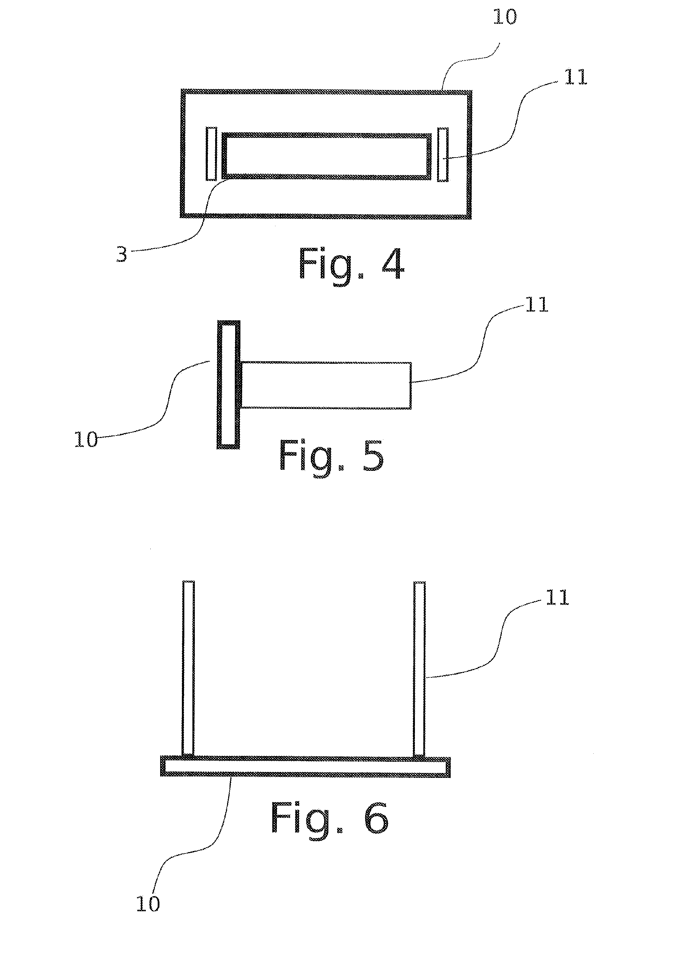

L'invention est illustrée ci-après à l'aide d'un exemple de réalisation et en référence au dessin annexé sur lequel : la figure 1 est une vue en perspective d'un mode de réalisation du dispositif selon l'invention, la figure 2 est une vue en coupe transversale d'un mode de réalisation du dispositif selon l'invention et la figure 3 est une vue de coupe du dispositif selon l'invention. Les figures 4, 5 et 6 présentent respectivement une vue de dos, une vue de côté et une vue de dessus d'un mode de réalisation particulier d'une façade d'un four selon l'invention.

Avec référence au dessin, un dispositif de décongélation, réchauffage et cuisson 1 d'un produit alimentaire, notamment d'une pâte alimentaire surgelée selon l'invention se présente sous la forme d'un boîtier parallélépipédique rectangle ou enceinte chauffante 2, pourvu d'une ouverture 3 de passage d'un support mobile 4 de la pâte alimentaire.

Cette enceinte chauffante 2 est relativement compacte et donc d'un faible encombrement, débordant peu latéralement, en hauteur et en profondeur du dimensionnement du support mobile 4 de la pâte alimentaire.

Ainsi cette enceinte 2 peut avoir une hauteur de 10 à 20 cm, une largeur de 20 à 40 cm et une profondeur équivalente à sa largeur.

Le support mobile 4 est avantageusement monté coulissant, par exemple sur des glissières latérales (non représentées) de l'enceinte. Il coulisse parallèlement au plan de l'enceinte.

Le dispositif 1 de décongélation, de réchauffage et de cuisson, de la pâte comporte deux rampes 5,6 de tubes émetteurs 7 de rayons chauffants à ondes courtes disposés parallèlement au plan de la sole 8, au-dessus et en-dessous de celle-ci.

Les tubes émetteurs sont de forte puissance électrique, environ 500 W par exemple, émettant un rayonnement chauffant homogène d'ondes courtes, à une longueur d'onde de 1.5 µm à 2.5 µm sur la pâte alimentaire. Ils ont une longueur équivalente à la profondeur de la sole 8.

Ces rampes 5,6 de tubes 7 sont recouverts d'une couche de céramique 9 sur leur partie supérieure (pour la rampe au-dessus de la sole 8) ou sur leur partie inférieure (pour la rampe en-dessous de la sole 8).

Grâce à cette disposition, le rayonnement émis par les tubes de la rampe 5 est concentré sur la pâte alimentaire. Simultanément à l'effet de rayonnement supérieur qui permet d'obtenir un effet croustillant, la pâte est cuite au niveau inférieur au contact de la sole 8, laquelle est chauffée par les tubes émetteurs de la rampe 6.

Selon un mode de réalisation particulier de l'invention, ladite enceinte 2 pourra comprendre une façade amovible 10. Ladite façade amovible 10 permet un accès facile à l'intérieur du four 1 pour effectuer les opérations de nettoyage et d'entretien. Selon un mode de réalisation préféré, ladite façade amovible 10 est associée, au niveau de sa face interne à deux moyens de protection 11, placés perpendiculairement à ladite face interne, de telle sorte qu'une fois la façade amovible 10 en place sur l'enceinte 2 lesdits moyens de protection 11 sont placés de part et d'autre de ladite sole 8 et de telle sorte que tout ou partie desdits moyens de protection 11 est placé à un niveau supérieur à celui de ladite sole 8.

Selon un mode de réalisation encore plus préféré, lesdits moyens de protection 11 comprennent des lames dont le plan est sensiblement perpendiculaire à celui de la sole 8. Les moyens de protection 11 font écran entre la sole 8 et la face interne des parois latérales de l'enceinte 2 et permettent de protéger lesdites faces internes des projections émises lors de la cuisson. De plus, l'entretien du four est ainsi facilité car les moyens de protection 11 vont pouvoir être retirés de l'enceinte 1 avec la paroi amovible 10 et être lavés aisément.

Ce qui précède montre l'intérêt du dispositif selon l'invention pour la décongélation, le réchauffage et la cuisson rapide d'un produit alimentaire, notamment en vue d'une commercialisation rapide depuis une forme surgelée. On peut également envisager l'utilisation d'un four selon l'invention pour une utilisation domestique.

## Revendications

1. - Dispositif (1) de décongélation, réchauffage et cuisson d'un produit alimentaire, notamment d'une pâte alimentaire surgelée, comprenant au moins une enceinte de chauffage (2), pourvue d'au moins une sole (8) et d'une rampe (5) de tubes émetteurs (7) de rayons chauffants à ondes courtes, comprises entre 1 et 4 µm, à forte puissance disposés au-dessus de ladite sole (8), à faible distance de celle-ci et au-dessus de sa surface **caractérisé en ce que** tout ou partie de la surface supérieure des dits tubes émetteurs (7) de rayons chauffants à ondes courtes à forte puissance est recouverte par une couche de céramique (9) et **en ce que en ce que** ladite sole (8) est une plaque en verre chauffée par une rampe(6) de tubes émetteurs (7) de rayons chauffants à ondes courtes, comprises entre 1 et 4 µm, à forte puissance disposés en-dessous de ladite sole (8), à faible distance de celle-ci et en-dessous de sa surface.

2. - Dispositif (1) de décongélation, réchauffage et cuisson d'un produit alimentaire, notamment d'une pâte alimentaire surgelée, selon la revendication précédente **caractérisé en ce que** l'épaisseur de ladite couche de céramique (9) est comprise entre 1 et 5 mm.

3. - Dispositif (1) de décongélation, réchauffage et cuisson d'un produit alimentaire, notamment d'une pâte alimentaire surgelée, selon l'une des revendications précédentes **caractérisé en ce que** ladite rampe (5, 6) de tubes émetteurs est disposée de façon parallèle à la surface de la sole (8), à faible distance de celle-ci, de l'ordre de 50 à 100 mm.

4. - Dispositif (1) de décongélation, réchauffage et cuisson d'un produit alimentaire, notamment d'une pâte alimentaire surgelée, selon l'une des revendications précédentes **caractérisé en ce que** ladite sole (8) est montée sur un tiroir mobile (4) relativement à une ouverture (3) adéquate de l'enceinte du dispositif.

5. - Dispositif (1) de décongélation, réchauffage et cuisson d'un produit alimentaire, notamment d'une pâte alimentaire surgelée, selon l'une des revendications précédentes **caractérisé en ce que** lesdits tubes émetteurs (7) de rayons chauffants à ondes courtes, émettent des ondes dont la longueur d'ondes est comprise entre 2 et 3µm.

6. - Dispositif (1) de décongélation, réchauffage et cuisson d'un produit alimentaire, notamment d'une pâte alimentaire surgelée, selon l'une des revendications précédentes **caractérisé en ce que** lesdits tubes émetteurs (7) de rayons chauffants à ondes courtes, émettent des ondes dont la longueur d'ondes est comprise entre 1.5 et 2.5 µm.
